(19) **Europäisches Patentamt / European Patent Office / Office européen des brevets**

(11) **EP 1 079 493 B1**

(12) **EUROPÄISCHE PATENTSCHRIFT**

(45) Veröffentlichungstag und Bekanntmachung des Hinweises auf die Patenterteilung:
**29.10.2008   Patentblatt 2008/44**

(51) Int Cl.:
*H02J 3/01* (2006.01)

(21) Anmeldenummer: **00118005.8**

(22) Anmeldetag: **22.08.2000**

(54) **Verfahren zur Oberschwingungskompensation in elektrischen Versorgungsnetzen**

Method for harmonics compensation in electric power networks

Méthode pour la compensation des harmoniques dans des réseaux d'alimentation électrique

(84) Benannte Vertragsstaaten:
**AT BE CH CY DE DK ES FI FR GB GR IE IT LI LU MC NL PT SE**

(30) Priorität: **23.08.1999   DE 19939601**

(43) Veröffentlichungstag der Anmeldung:
**28.02.2001   Patentblatt 2001/09**

(73) Patentinhaber: **Eltroplan-Revcon Elektrotechnische Anlagen GmbH 59199 Bönen (DE)**

(72) Erfinder: **Krause, Siegfried, Dipl.-Ing. 44137 Dortmund (DE)**

(74) Vertreter: **Zeitler, Giselher et al Zeitler - Volpert - Kandlbinder Patentanwälte Postfach 26 02 51 80059 München (DE)**

(56) Entgegenhaltungen:
**WO-A-89/06879          DE-A- 3 708 468**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Kompensieren von Oberschwingungen in einem elektrischen Versorgungsnetz für elektrische Verbraucher gemäß dem Oberbegriff des Anspruchs 1.

Nichtlineare Verbraucher beziehen aus einem Versorgungsnetz mit sinusförmigen Versorgungsspannungen bzw. -strömen nicht sinusförmige Verbraucherspannungen bzw. -ströme. Diese nicht sinusförmigen Spannungen bzw. Ströme können mittels Fourier-Reihen in sinusförmige Größen zerlegt werden, die aus einer Grundschwingung, wie z.B. f = 50 Hz, und Oberschwingungen der Frequenz n·f bestehen. Die durch die Stromoberschwingungen der Verbraucherspannung bzw. des Verbraucherstrom verursachten Auswirkungen auf das speisende Netz werden als Netzrückwirkungen bezeichnet. Typische Netzrückwirkungen sind: Erhöhung der Verlustleistung im Versorgungsnetz und bei anderen Verbrauchern; Spannungsabfälle und Kommutierungseinbrüche; Verformung der Netzspannung; Resonanzerscheinungen im Netz; Störungen bei benachbarten Baugruppen und Verbrauchern, ggf. durch die vorgenannten Resonanzerscheinungen.

Zu den nicht linearen Verbrauchern zählen z.B. Drosseln, Transformatoren und leistungselektronische Baugruppen, wie Gleichrichter, Wechselrichter, Drehstromsteller usw. Der vermehrte Einsatz und die immer größeren Leistungen von leistungselektronischen Baugruppen hat dazu geführt, dass Normen erarbeitet wurden oder in Vorbereitung sind, die die zulässigen Stromoberschwingungen in bezug auf bestimmte Versorgungsnetze spezifizieren, mit dem Ziel, die Netzrückwirkungen zu begrenzen.

Bei der Reduzierung von Stromoberschwingungen unterscheidet man prinzipiell netzseitige und gerätetechnische Maßnahmen. Zu den netzseitigen Maßnahmen zählen z.B. Saugdrosselkreise und aktive Oberschwingungskompensation. Bei den gerätetechnischen Maßnahmen ist beispielsweise die Erhöhung der Pulszahl von Gleich- und Wechselrichterschaltungen bekannt (12-pulsige Gleichrichterschaltungen).

Aufgrund der rasanten Entwicklung in der Leistungselektronik, besonders durch die Verfügbarkeit von IGBT-Leistungstransistoren ist es möglich, Blindleistungsstromrichter zu realisieren, die ausschließlich Oberschwingungsblindleistung kompensieren. Dies bezeichnet man als aktive Oberschwingungskompensation und diese Blindleistungsstromrichter zeichnen sich dadurch aus, dass ihr Netzstrom nahezu jede Stromform annehmen kann.

Die grundsätzliche Funktion einer aktiven Oberschwingungskompensation besteht darin, die zu kompensierenden Ströme zu messen und ein Leistungteil der aktiven Oberschwingungskompensation so anzusteuern, dass Ströme fließen, die dazu führen, dass sich der Oberschwingungsgehalt des Netzstroms in der Summe verringert.

Ein entscheidender Nachteil dieser Geräte besteht jedoch darin, dass die minimale Reaktionszeit bzw. Ansprechzeit 40 ms beträgt, also bezogen auf ein 50 Hz-Netz mindestens dem zweifachen der Periodendauer entspricht. Diese hohe Ansprechzeit der Geräte hat seine Ursache nicht in der Reaktionszeit des Leistungsteils der Oberschwingungskompensation selbst, die durch die maximale Taktfrequenz der Leistungstransistoren von 20 KHz maximal 50 Mikrosekunden beträgt, sondern ist in dem Funktionsprinzip der Messwerterfassung und Auswertung der zu kompensierenden Ströme begründet.

Die zu kompensierenden Ströme haben einen Grundschwingungs- und Oberschwingungsanteil und werden z.B. mit hochwertigen direkt abbildenden Stromwandlern gemessen, welche beispielsweise eine Grenzfrequenz von ca. 50 KHz aufweisen. Da der Oberschwingungsanteil kompensiert werden soll, wird von dem gemessenen Strom nun eine Oberschwingungsanalyse mittels digitaler Messwertverarbeitung durchgeführt, die mit Hilfe einer direkten Fourier-Transformation (DFT) oder einer Fastfourier-Transformation (FFT) berechnet wird. Das Ergebnis der Rechnung liefert den Anteil der Grundschwingung (50 Hz) und die Anteile der Oberschwingungen (n 50 Hz) nach ihrem Betrag und der jeweiligen Phasenlage. Die Oberschwingungsanteile werden nun in die Sollwerte für den Kompensationsstrom umgerechnet und vom Leistungsteil umgesetzt.

Die Durchführung der DFT oder FFT basiert mathematisch auf der Darstellung nicht sinusförmiger, periodischer Wechselgrößen durch Fourier-Reihen. Daraus ergibt sich die Ansprechzeit von 40 ms, die der doppelten Integrationszeit der Fourier-Integrale entspricht. Die FFT oder DFT muss eine Messdauer von n Periodendauer haben, um ein richtiges Rechenergebnis zu erzielen. Wird die Messdauer nicht genau eingehalten, führt dieses zu sog. Abbruchfehlern. Die Messgenauigkeit nimmt dabei mit der Erhöhung der Messdauer zu. Die theoretisch kürzeste, rein mathematische Messdauer beträgt 1 Periodendauer, die sich aufgrund der Fourier-Integrale ergibt. Die Messdauer ist ohne Berücksichtigung von sonstigen Durchlaufzeiten der Steuerungselektronik und des Rechnersystems identisch mit der Ansprechzeit, die eigentlich eine Verzugszeit darstellt. Man kann die Messdauer auch als Abtastrate der Messung bezeichnen.

Hochwertige Oberschwingungsanalysatoren benötigen z.B. 8 Periodendauer Messdauer, um ein Ergebnis mit befriedigender Messgenauigkeit zu liefern. Grundsätzlich werden Werteänderungen des Oberschwingungsgehaltes über die Messdauer integriert. Dies bedeutet praktisch eine Mittelwertbildung. Daraus folgt, dass, bezogen auf dynamische Vorgänge, kleiner 20 ms oder wesentlich kleiner der Messdauer die Genauigkeit sehr gering ist.

So beschleunigen und verzögern beispielsweise Frequenzumrichter (Gleichrichter am Netzeingang) innerhalb von ≤ 100 ms, wobei sich der Netzstrom innerhalb dieser Zeit von annähernd Leerlaufstrom bis Maximalstrom ändert.

Gemäß einem anderen Beispiel haben Servoantriebe ein noch weitaus dynamischeres Betriebsverhalten und werden ebenfalls über Gleichrichter vom Netz gespeist. Diese Beispiele verdeutlichen, dass bei Vorgängen wie oben geschildert, eine DFT oder FFT mit einer Abtastrate (Messdauer) von minimal 2 Netzperiodendauer ein schlechtes Ergebnis liefert.

Aus der DE 37 08 468 A1 sind ein Verfahren und eine Vorrichtung zum Kompensieren von Oberschwingungsbelastungen und/oder Blindlasten in einem Versorgungsnetz bekannt. Hierbei werden einzelne Kompensator-Phasenströme $i_{Kx}$ über eine Zweipunktregelung auf einen Sollwert geregelt, der sich aus der Differenz eines dem Netz im kompensierten Zustand entsprechenden Netzstromes $i_{Rsoll}$ und der Differenz des vom Verbraucher entnommen Verbraucherstromes $i_{vx}$ ergibt.

Der Erfindung liegt die Aufgabe zugrunde, eine verbesserte Oberschwingungskompensation zur Verfügung zu stellen, welche dem vermehrten Einsatz von leistungselektronischen Baugruppen mit einer entsprechend hohen Dynamik Rechnung trägt und auch Oberschwingungen mit einer derartig hohen Dynamik wirkungsvoll kompensiert.

Diese Aufgabe wird durch ein Verfahren der o.g. Art mit den in Anspruch 1 gekennzeichneten Merkmalen gelöst. Vorteilhafte Ausgestaltungen der Erfindung sind in den abhängigen Ansprüchen angegeben.

Bei dem Verfahren der o.g. Art ist es erfindungsgemäß vorgesehen, dass $U_{Netzsoll}(t)$ bzw. $I_{Netzsoll}(t)$ derart bestimmt werden, dass ein Mittelwert der zeitvariablen Kompensationsspannung $U_K(t)$ bzw. ein Mittelwert des zeitvariablen Kompensationsstromes $I_K(t)$ Null ist, wobei zum Bestimmen von $U_{Netzsoll(t)}$ bzw. $I_{Netzsoll(t)}$ folgende Schritte vorgesehen sind:

    (a) Messen eines Anfangswertes eines Gleichrichtermittelwertes von $U_v(t)$ bzw. $I_V(t)$
    (b) Setzen dieses Anfangswertes als ersten Scheitelwert von $U_{Netzsoll}(t)$ bzw. $I_{Netz-soll}(t)$,
    (c) Berechnen eines Mittelwertes von $U_K(t)$ bzw. $I_K(t)$ mittels Integration,
    (d) Regeln eines Effektivwertes von $U_{Netzsoll}(t)$ bzw. $I_{netzsoll}(t)$ derart, dass das Ergebnis der Integration von Schritt
    (c) Null wird.

Dies hat den Vorteil, dass bei der Oberschwingungskompensation innerhalb bestimmter Zeiträume genauso viel Energie aus dem Versorgungsnetz entnommen, wie in dieses abgegeben wird. Außerdem steht eine Oberschwingungskompensation mit niedrigen Ansprechzeiten und Reaktionszeiten zur Verfügung, welche durch den Verzicht auf Fourier-Transformationen lediglich durch eine Ansprechzeit eines Leistungsteiles einer Kompensationsvorrichtung bestimmt sind.

Die Ermittlung von Sollwerten für die Kompensation mittels $U_K(t)$ bzw. $I_K(t)$ erfolgt zweckmäßigerweise direkt aus Augenblickswerten der oberschwingungsbehafteten Spannung $U_v(t)$ bzw. des oberschwingungsbehafteten Verbraucherstromes $I_v(t)$ und somit in Echtzeit.

In einer bevorzugten Ausführungsform wird die vorbestimmte zeitvariable Netzsollspannung $U_{Netzsoll}(t)$ bzw. der vorbestimmte zeitvariable Netzsollstrom $I_{Netzsoll}(t)$ als

$$U_{Netzsoll}(t) = \hat{U}_{Netzsoll} \cdot \sin(\omega t + q)$$

*bzw.*

$$I_{Netzsoll}(t) = \hat{I}_{Netzsoll} \cdot \sin(\omega t + q)$$

gewählt, wobei $\hat{U}_{Netzsoll}$ und $\hat{I}_{Netzsoll}$ jeweilige Scheitelwerte sind und q ein eine Phasenlage verschiebender Parameter ist.

Zweckmäßigerweise wird der Phasenparameter q derart gewählt, dass sich $U_{Netzsoll}(t)$ bzw. $I_{Netzsoll}(t)$ im Wesentlichen mit einem zeitlichen Verlauf von $U_v(t)$ bzw. $I_v(t)$ decken.

Zweckmäßigerweise wird ein durch die Zuführung von $U_K(t)$ bzw. $I_K(t)$ aus dem Versorgungsnetz entnommener Leistungsteil gespeichert und zu einem entsprechenden Zeitpunkt dem Versorgungsnetz mittels $U_K(t)$ bzw. $I_K(t)$ wieder zugeführt.

Beispielsweise wird die zeitvariable Verbraucherspannung $U_v(t)$ bzw. der zeitvariable Verbraucherstrom $I_v(t)$ als Messwert dem Versorgungsnetz entnommen.

Die Erfindung wird im Folgenden anhand der Zeichnung näher erläutert. Diese zeigt in:

Fig. 1    ein schematisches Blockschaltbild einer Anordnung zur Oberschwingungskompensation und

Fig. 2    einen zeitlichen Verlauf von verschiedenen Strömen bei der Ausführung des erfindungsgemäßen Verfahrens.

Nachfolgend wird die Erfindung lediglich beispielhaft anhand der auftretenden Ströme im Detail näher erläutert. Wegen des bekannten Zusammenhangs zwischen Strom und Spannung ist jedoch "Strom" auch synonym für "Spannung" zu verstehen, wobei etwaige Phasenunterschiede zwischen Strom und Spannung keinen Einfluss auf diese Austauschbarkeit von "Strom" und "Spannung" in den folgenden Ausführungen haben.

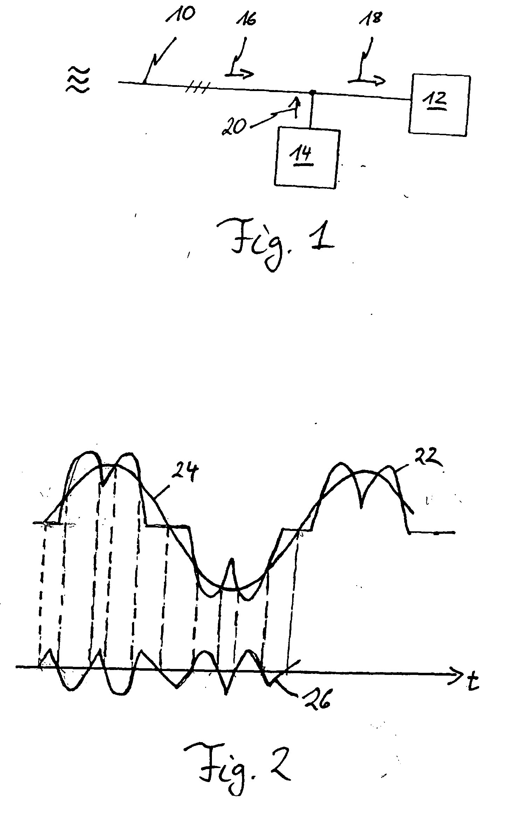

Die in Fig. 1 schematisch dargestellte Oberschwingungskompensation für ein Versorgungsnetzwerk 10, an dem ein nicht linearer Verbraucher 12 angeschlossen ist, umfaßt eine Kompensationsvorrichtung 14. Der Ausdruck "Versorgungsnetz" bezeichnet hier elektrische Energiezuführungen für an unterschiedlichen Orten vorhandene elektrische Verbraucher 12, wie beispielsweise Geräte in privaten Haushalten oder Produktionsunternehmen. Das Versorgungsnetzwerk 10 liefert einen Netzstrom $I_{Netz}(t)$ und der nichtlineare Verbraucher 12 führt einen Verbraucherstrom $I_v(t)$ 18 ab, welcher entsprechend den Charakteristiken des nichtlinearen Verbrauchers 12 oberflächenschwingungsbehaftet ist. Die Kompensationsvorrichtung 14 mißt den oberschwingungsbehafteten Verbraucherstrom $I_v(t)$ 16 und bestimmt daraus einen Kompensationsstrom $I_K(t)$ 20, welcher von der Kompensationsvorrichtung 14 zugeführt wird. Sowohl der Netzstrom $I_{Netz}(t)$ 16 als auch der Verbraucherstrom $I_v(t)$ 18 variieren über die Zeit. Ferner variieren auch die Oberschwingungen über die Zeit. Dementsprechend variiert der Kompensationsstrom $I_K(t)$ 20 über die Zeit.

Erfindungsgemäß arbeitet diese Meßwerterfassung und Verarbeitung in Echtzeit und weist eine hohe Meßgenauigkeit auf. Auf die einleitend beschriebenen Meßverfahren gemäß FFT und DFT wird erfindungsgemäß vollständig verzichtet, wie im folgenden näher ausgeführt wird. Die Ermittlung des Soll-Wertes für den Kompensationsstrom $I_K(t)$ 20 erfolgt direkt aus Augenblickswerten des oberschwingungsbehafteten Stroms $I_v(t)$ 18 der Verbraucher 12.

Die Kompensationsvorrichtung 14 umfaßt beispielsweise einen sechs-pulsigen Gleichrichter, der dem Versorgungsnetz 10 den nicht sinusförmigen Verbraucherstrom $I_v(t)$ 18 entnimmt. Der Kompensationsstrom $I_K(t)$ der aktiven Oberschwingungskompensation 14 soll bewirken, daß der dem Versorgungsnetz 10 entnommene Netzstrom 16 im Idealfall keinen Oberschwingungsanteil mehr aufweist. Somit würde der Netzstrom $I_{Netz}(t)$ 16 nur noch aus dem Grundschwingungsanteil bestehen und wäre ein sinusförmiger Netzstrom. Hierbei wird der Verbraucherstrom $I_v(t)$ 18 von Stromwandlern gemessen und der Meßwerterfassung der Vorrichtung 14 zugeführt.

Erfindungsgemäß wird für einen Soll-Wert des Netzstromes $I_{Netzsoll}(t)$ eine sinusförmige Spannung verwendet, die eine Netzfrequenz und eine bestimmte Phasenlage zur Netz-Istspannung $I_{Netzist}(t)$ haben soll, wie beispielsweise $\cos \varphi = 1$. Der Effektivwert dieses Sollwertes des Netzstromes $I_{Netzsoll}(t)$ variiert dabei von annähernd Null bis zu einem Maximalwert, je nach Höhe des Verbraucherstroms 18. Der Oberschwingungsgehalt der Sollwertspannung des Netzstromes $I_{Netzsoll}(t)$ hat im Idealfall keinen Oberschwingungsgehalt oder nur einen sehr geringen, wenn der Netzstrom 10 einen sinusförmigen Verlauf annehmen soll.

Fig. 2 veranschaulicht über eine Zeitachse t die bei der Ausführung des erfindungsgemäßen Verfahrens auftretenden Ströme. Der oberschwingungsbehaftete Verbraucherstrom $I_v(t)$ ist mit 22 bezeichnet. Der angestrebte Netzsollstrom bzw. Sollwert des Netzstromes $I_{Netzsoll}(t)$ ist mit 24 bezeichnet. Der von der Kompensationsvorrichtung 14 zugeführte Kompensationsstrom $I_K(t)$ ist mit 26 bezeichnet.

Die Sollwertspannung des Netzstroms $I_{Netz}(t)$ 24 ist beispielsweise gemäß folgender Funktion vorbestimmt

$$f_1(t) = \hat{U}_{sn} \cdot \sin(\omega t + q)$$

Die Istwertspannung des Verbraucherstroms $I_v(t)$ 22 folgt der Funktion

$$f_2(t) = U_I(t)$$

Die Sollwertspannung des Kompensationsstromes $I_K(t)$ 26 entspricht der Funktion

$$f_3(t) = U_{sk}(t)$$

Die Funktion $f_2(t)$ kann nahezu jeden Kurvenverlauf annehmen. Die Sollwertspannung des Komposationsstromes $I_K(t)$ 26 wird erfindungsgemäß errechnet aus:

$$f_3(t) = f_1(t) - f_2(t)$$

Durch Umstellen dieser Gleichung ergibt sich:

$$f_1(t) = f_2(t) + f_3(t)$$

Durch Einsetzen der Funktion $f_1(t)$ ergibt sich:

$$f_2(t) + f_3(t) = \hat{U}_{sn} \cdot \sin(\omega t + q)$$

Geht man wieder von der Betrachtung der Spannungen zurück auf die Betrachtung der Ströme so folgt daraus, daß dann, wenn der Kompensationsstrom $I_K(t)$ 26 der Sollwertspannung des errechneten Kompensationsstroms folgt, die Summe aus $I_K(t) + I_v(t)$ einen sinusförmigen Netzstrom $I_{Netz}(t)$ 16 ergibt.

Der Istwert des Kompensationsstromes wird ebenfalls mittels eines Stromwandlers gemessen und durch Vergleich mit der Sollwerspannung des Kompensationsstroms geregelt.

Mit anderen Worten wird in Echtzeit und aus augenblicklichen Werten der Kompensationsstrom $I_K(t)$ 26 aus einer Differenz des Verbraucherstroms $I_v(t)$ 22 und des angestrebten Sollwertes des Netzstromes $I_{Netzsoll}(t)$ 24 ermittelt. Da dieses Verfahren auf eine zeitraubende Fourier-Transformation verzichtet, ergeben sich wesentlich kürzere Ansprech- und Reaktionszeiten, welche im wesentlichen nur noch durch die Bauteile der Kompensationsvorrichtung 14 und insbesondere durch dessen Leistungsteil begrenzt sind.

Die praktische Ausführung der Rechenoperation durch Berechnung der Differenz des Verbraucherstroms $I_v(t)$ 22 und des Netzwerksollstromes $I_{Netzsoll}(t)$ 24 wird beispielsweise mit einer Analogrechenschaltung ausgeführt, die eine sehr hohe Rechengeschwindigkeit aufweist. Bei Verwendung von schnellen Operationsverstärkern für den Subtrahierer werden Transitfrequenzen von 10 MHz erreicht und die Anstiegsgeschwindigkeit der Ausgangsspannung kann bis zu 100 V/$\mu$s betragen.

Diese Werte übertreffen die Reaktionszeit der im Stand der Technik verfügbaren Stromwandler und des Leistungsteils erheblich. Alternativ ist es auch möglich, die Rechenoperation der Differenzbildung mit Hilfe eines digitalen Rechensystems auszuführen.

Die Regelung des Effektivwertes der Sollspannung des Netzstromes $I_{Netzsoll}(t)$ 24 erfolgt derart, daß ein Mittelwert des Kompensationsstromes $I_K(t)$ 26 Null ist. Als Anfangswert wird ein Gleichrichtermittelwert des Verbraucherstroms $I_v(t)$ 22 verwendet, der einen Scheitelwert der Sollwertspannung des Netzstromes $I_{Netzsoll}(t)$ 24 erstmalig bestimmt. Daraufhin wird der Mittelwert der Sollwertspannung des Kompensationsstromes $I_K(t)$ 26 durch Integration berechnet und das Ergebnis dieser Integration regelt den Effektivwert der Sollwertspannung des Netzstromes $I_{Netzsoll}(t)$ 24 derart, daß das Ergebnis der Integration Null wird, was einem Mittelwert Null entspricht. Dies bedeutet, daß bei der Überschwingungskompenstion mittels des Kompensationsstromes $I_K(t)$ innerhalb von bestimmten Zeiträumen genauso viel Energie aus dem Versorgungsnetz 10 aufgenommen wird, wie in dieses Versorgungsnetz 10 abgegeben wird.

Ein Speicher des Leistungsteils der Kompensationsvorrichtung 14 übernimmt die Speicherung der aus dem Versorgungsnetz 10 aufgenommene Energie, bis diese wieder in das Versorgungsnetz 10 abgegeben wird. Daraus erfolgt, daß die vorab beschriebene Regelung entscheidend die Speichergröße bestimmt.

Das Funktionsprinzip der Meßwerterfassung, Meßwertauswertung und der Regelung kann sowohl für einphasige als auch für dreiphasige aktive Oberschwingungskompensation verwendet werden.

**Patentansprüche**

**1.** Verfahren zum Kompensieren von Oberschwingungen in einem elektrischen Versorgungsnetz für elektrische Verbraucher, welche diese Oberschwingungen in dem Versorgungsnetz erzeugen, wobei von dem Versorgungsnetz eine zeitvariable Netzspannung $U_{Netz}(t)$ bzw. ein zeitvariabler Netzstrom $I_{Netz}(t)$ zugeführt und von einem jeweiligen Verbraucher eine jeweilige zeitvariable Verbraucherspannung $U_v(t)$ bzw. ein jeweiliger zeitvariabler Verbraucherstrom $I_v(t)$ entnommen wird, wobei von der zeitvariablen Verbraucherspannung $U_v(t)$ bzw. von dem zeitvariablen

Verbraucherstrom $I_V(t)$ eine vorbestimmte zeitvariable Netzsollspannung $U_{Netzsoll}(t)$ bzw. ein vorbestimmter zeitvariabler Netzsollstrom $I_{Netzsou}(t)$ abgezogen wird und die Differenz als zeitvariable Kompensationsspannung $U_K(t)$ bzw. zeitvariabler Kompensationsstrom $I_K(t)$ gemäß

$$U_K(t) = U_V(t) - U_{Netzsoll}(t) \quad bzw.$$

$$I_K(t) = I_V(t) - I_{Netzsoll}(t)$$

bestimmt und dem Versorgungsnetz zugeführt wird,
**dadurch gekennzeichnet,**
**dass** $U_{Netzsoll}(t)$ bzw. $I_{Netzsoll}(t)$ derart bestimmt werden, dass ein Mittelwert der zeitvariablen Kompensationsspannung $U_K(t)$ bzw. ein Mittelwert des zeitvariablen Kompensationsstromes $I_K(t)$ Null ist, wobei zum Bestimmen von $U_{Netzsoll}(t)$ bzw. $I_{Netzsoll}(t)$ folgende Schritte vorgesehen sind:

 (a) Messen eines Anfangswertes eines Gleichrichtermittelwertes von $U_V(t)$ bzw. $I_V(t)$
 (b) Setzen dieses Anfangswertes als ersten Scheitelwert von $U_{Netzsoll}(t)$ bzw. $I_{Netzsoll}(t)$,
 (c) Berechnen eines Mittelwertes von $U_K(t)$ bzw. $I_K(t)$ mittels Integration,
 (d) Regeln eines Effektivwertes von $U_{Netzsoll}(t)$ bzw. $I_{Netzsoll}(t)$ derart, dass das Ergebnis der Integration von Schritt (c) Null wird.

2. Verfahren nach Anspruch 1, **dadurch gekennzeichnet, dass** $U_V(t)$ bzw. $I_V(t)$ sowie $U_K(t)$ bzw. $I_K(t)$ in Echtzeit ermittelt werden und $U_K(t)$ bzw. $I_K(t)$ in Echtzeit dem Versorgungsnetz zugeführt werden.

3. Verfahren nach Anspruch 1 oder 2, **dadurch gekennzeichnet, dass** die vorbestimmte zeitvariable Netzsollspannung $U_{Netzsoll}(t)$ bzw. der vorbestimmte zeitvariable Netzsollstrom $I_{Netzsoll}(t)$ als

$$U_{Netzsoll}(t) = \hat{U}_{Netzsoll} \cdot \sin(\omega t + q) \quad bzw.$$

$$I_{Netzsoll}(t) = \hat{I}_{Netzsoll} \cdot \sin(\omega t + q)$$

gewählt wird, wobei $\hat{U}_{Netzsoll}$ und $\hat{I}_{Netzsoll}$ jeweilige Scheitelwerte sind und q ein eine Phasenlage verschiebender Parameter ist.

4. Verfahren nach Anspruch 3, **dadurch gekennzeichnet, dass** der Phasenparameter q derart gewählt wird, dass sich $U_{Netzsoll}(t)$ bzw. $I_{Netzsoll}(t)$ im Wesentlichen mit einem zeitlichen Verlauf von $U_V(t)$ bzw. $I_V(t)$ deckt.

5. Verfahren nach einem der vorhergehenden Ansprüche, **dadurch gekennzeichnet, dass** ein durch die Zuführung von $U_K(t)$ bzw. $I_K(t)$ aus dem Versorgungsnetz entnommener Leistungsteil gespeichert und zu einem entsprechenden Zeitpunkt dem Versorgungsnetz mittels $U_K(t)$ bzw. $I_K(t)$ wieder zugeführt wird.

6. Verfahren nach einem der vorhergehenden Ansprüche, **dadurch gekennzeichnet, dass** die zeitvariable Verbraucherspannung $U_V(t)$ bzw. der zeitvariable Verbraucherstrom $I_V(t)$ als Messwert dem Versorgungsnetz entnommen wird.

7. Verwendung des Verfahrens gemäß wenigstens einem der vorhergehenden Ansprüche zur einphasigen oder dreiphasigen Oberschwingungskompensation.

**Claims**

1. Method of compensating for harmonics, on an electrical supply system for electrical loads which generate such harmonics on the supply system, a time-variable system voltage $U_{System}(t)$ and a time-variable system current $I_{System}(t)$ being supplied by the supply system and a given time-variable load voltage $U_L(t)$ and a given time-variable load current $I_L(t)$ being drawn by a given load, a predetermined time-variable desired system voltage $U_{System,\,desired}(t)$ and a predetermined time-variable desired system current $I_{System,\,desired}(t)$ being subtracted from the time-variable load voltage $U_L(t)$ and the time-variable load current $I_L(t)$ respectively and the differences being determined as a time-variable compensating voltage $U_c(t)$ and a time-variable compensating current $I_c(t)$ respectively from

$$U_C(t) = U_L(t) - U_{System,desired}(t)$$

and

$$I_C(t) = I_L(t) - I_{System,desired}(t)$$

respectively and being fed to the supply system, **characterised in that** $U_{System,\,desired}(t)$ and $I_{System,\,desired}(t)$ are determined in such a way that a mean of the time-variable compensating voltage $U_c(t)$ and a mean of the time-variable compensating current $I_c(t)$ are zero, the steps provided for the determination of $U_{System,\,desired}(t)$ and $I_{System,\,desired}(t)$ being as follows:

   (a) measurement of initial values of rectifier-supplied mean values of $U_L(t)$ and $I_L(t)$ respectively,
   (b) setting of these initial values as first peak Values of $U_{System,\,desired}(t)$ and $I_{System,\,desired}(t)$ respectively,
   (c) calculation of means of $U_c(t)$ and $I_c(t)$ respectively by integration,
   (d) regulation of RMS values of $U_{System,\,desired}(t)$ and $I_{System,\,desired}(t)$ respectively in such a way that the result of the integration in step c is zero.

2. Method according to claim 1, **characterised in that** $U_L(t)$ and $I_L(t)$ respectively, and $U_c(t)$ and $I_c(t)$ respectively, are determined in real time and $U_c(t)$ and $I_c(t)$ respectively are fed to the supply system in real time.

3. Method according to claim 1 or 2, **characterised in that** the predetermined time-variable desired system voltage $U_{System,\,desired}(t)$ and the predetermined time-variable desired system current $I_{System,\,desired}(t)$ are selected to be

$$U_{System,desired}(t) = \hat{U}_{System,desired} \cdot \sin(\omega t + q)$$

and

$$I_{System,desired}(t) = \hat{I}_{System,desired} \cdot \sin(\omega t + q)$$

respectively, where $\hat{U}_{System,desired}$ and $\hat{I}_{System,desired}$ are respective peak values and q is a parameter which sets a phase shift.

4. Method according to claim 3, **characterised in that** the phase parameter q is selected to be such that $U_{System,\,desired}(t)$ and $I_{System,\,desired}(t)$ substantially coincide with curves followed over time by $U_L(t)$ and $I_L(t)$ respectively

5. Method according to one of the foregoing claims, **characterised in that** power components which are drawn from the supply system as a result of the infeed of $U_c(t)$ and $I_c(t)$ respectively are stored and are fed back to the supply system at an appropriate point in time by means of $U_c(t)$ and $I_c(t)$ respectively.

6. Method according to one of the foregoing claims, **characterised in that** the time-variable load voltage $U_L(t)$ and the time-variable load current $I_L(t)$ are drawn from the supply system as measured values.

7. Use of the method according to at least one of the foregoing claims for single-phase or three-phase compensation for harmonics.

**Revendications**

1. Procédé pour la compensation d'harmoniques dans un réseau d'alimentation électrique pour des appareils consommateurs électriques qui génèrent ces harmoniques dans le réseau d'alimentation, dans lequel une tension de réseau $U_{réseau}(t)$ variable dans le temps ou un courant de réseau $I_{réseau}(t)$ variable dans le temps est alimentée/ alimenté depuis le réseau d'alimentation et une tension respective de consommateur $U_{cons}(t)$ variable dans le temps ou un courant respectif de consommateur $I_{cons}(t)$ variable dans le temps est prélevée/prélevé par un appareil consommateur respectif, dans lequel de la tension de consommateur $U_{cons}(t)$ variable dans le temps ou du courant de consommateur $I_{cons}(t)$ variable dans le temps, on soustrait une tension de consigne de réseau prédéterminée $U_{consigne-réseau}(t)$ variable dans le temps ou respectivement un courant de consigne de réseau prédéterminé $I_{consigne-réseau}(t)$ variable dans le temps, et la différence est déterminée à titre de tension de compensation $U_{comp}(t)$ variable dans le temps ou de courant de compensation $I_{comp}(t)$ variable dans le temps d'après les relations

$$U_{comp}(t) = U_{cons}(t) - U_{consigne-réseau}(t) \text{ ou}$$

$$I_{comp}(t) = I_{cons}(t) - I_{consigne-réseau}(t)$$

et on la/le fournit au réseau d'alimentation,
**caractérisé en ce que**
$U_{consigne-réseau}(t)$ ou $I_{consigne-réseau}(t)$ sont déterminés de telle façon qu'une valeur moyenne de la tension de compensation $U_{comp}(t)$ variable dans le temps ou qu'une valeur moyenne du courant de compensation $I_{comp}(t)$ variable dans le temps est nulle, et pour déterminer $U_{consigne-réseau}(t)$ ou $I_{consigne-réseau}(t)$, on prévoit les étapes suivantes :

(a) on mesure une valeur de départ d'une valeur moyenne de rectification de $U_{cons}(t)$ ou de $I_{cons}(t)$
(b) on établit cette valeur de départ comme première valeur de crête de $Uc_{onsigne-réseau}(t)$ ou de $I_{consigne-réseau}(t)$,
(c) on calcule une valeur moyenne de $U_{comp}(t)$ ou de $I_{comp}(t)$ par intégration,
(d) on régule une valeur effective de $U_{consigne-réseau}(t)$ ou de $I_{consigne-réseau}(t)$ de telle façon que le résultat de l'intégration de l'étape (c) devient nulle.

2. Procédé selon la revendication 1, **caractérisé en ce que** $U_{cons}(t)$ ou $I_{cons}(t)$ ainsi que $U_{comp}(t)$ ou $I_{comp}(t)$ sont déterminés en temps réel et $U_{comp}(t)$ ou $I_{comp}(c)$ sont alimentés en temps réel dans le réseau d'alimentation.

3. Procédé selon la revendication 1 ou 2, **caractérisé en ce que** la tension de consigne réseau prédéterminée $U_{consigne-réseau}(t)$ variable dans le temps ou le courant de consigne de réseau prédéterminé $I_{consigne-réseau}(t)$ variable dans le temps sont choisies sous la forme

$$U_{consigne-réseau}(t) = \hat{U}_{consigne-réseau} \cdot \sin(\omega t + q) \text{ ou}$$

$$I_{consigne-réseau}(t) = \hat{I}_{consigne-réseau} \cdot \sin us(\omega t + q),$$

dans lesquelles $\hat{U}_{consigne-réseau}$ et $\hat{I}_{consigne-réseau}$ sont des valeurs de crête respective et q est un paramètre de décalage d'une situation de phase.

4. Procédé selon la revendication 3, **caractérisé en ce que** le paramètre de phase q est choisi de telle façon que $U_{consigne-reseau}(t)$ ou $I$ consigne-réseau (t) couvre essentiellement une évolution temporelle de $U_{cons}(t)$ ou $I_{cons}(t)$.

5. Procédé selon l'une des revendications précédentes, **caractérisé en** se qu'une partie de puissance prélevée hors du réseau d'alimentation par l'alimentation de $U_{comp}(t)$ ou $I_{comp}(t)$ est accumulée et à nouveau alimentée à un instant correspondant dans le réseau d'alimentation au moyen de $U_{comp}(t)$ ou $I_{comp}(t)$.

6. Procédé selon l'une des revendications précédentes, **caractérisé en ce que** la tension de consommateur $U_{cons}$ (P) variable dans le temps ou le courant de consommateur $I_{cons}(t)$ variable dans le temps est prélevée/prélevé à titre de valeur de mesure depuis le réseau d'alimentation.

7. Utilisation du procédé selon l'une au moins des revendications précédentes pour la compensation d'harmoniques monophasées ou triphasées.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3708468 A1